# EUROPÄISCHE PATENTANMELDUNG

(11) **EP 0 911 122 A1**
(43) Veröffentlichungstag der Anmeldung: **28.04.1999**
(21) Anmeldenummer: 98119662.9
(22) Anmeldetag: 17.10.1998
(51) Int. Cl.: B25H 1/04, B25H 1/12, B25H 3/04, A47B 88/04

(54) **Wekzeugwagen**

(30) Priorität: 22.10.1997 DE 29718759 U
(71) Anmelder: Rau GmbH, 72336 Balingen (DE)
(72) Erfinder: Rau, Herbert, D-72336 Balingen (DE)
(74) Vertreter: Ostertag, Ulrich

(57) **Zusammenfassung**

Ein Werkzeugwagen weist einen von Rädern (2) getragenen schrankartigen Aufbau (1) auf, dessen Innenraum von zwei seitlichen Wangen (3), einer Bodenplatte (4) und einer Oberplatte (5) begrenzt wird. In diesem Innenraum befindet sich zur Aufbewahrung von Gegenständen, insbesondere von Werkzeugen, mindestens ein ausziehbarer Wandauszug (13), welcher eine vertikale Platte (14) mit einer Vielzahl von Befestigungselementen besitzt.

## Beschreibung

Die Erfindung betrifft einen Werkzeugwagen mit einem von Rädern getragenen schrankartigen Aufbau, in dessen von mindestens zwei seitlichen Wangen, einer Bodenplatte und einer Oberplatte begrenztem Innenraum ausziehbare Mittel zur Aufbewahrung von Gegenständen, insbesondere von Werkzeugen, angeordnet sind.

Derartige Werkzeugwagen dienen in Werkstätten dazu, eine Vielzahl von Gegenständen, insbesondere Werkzeugen, am jeweiligen Arbeitsplatz des Benutzers bereitzuhalten. Bekannte derartige Werkzeugwagen umfassen im wesentlichen als Aufbewahrungsmittel konventionelle Schubladen, die in seitlicher Richtung aus dem schrankartigen Aufbau herausgezogen werden können. In diesen Schubladen können die verschiedenen Werkzeuge aber häufig nicht übersichtlich und griffbereit genug aufbewahrt werden. Manche Werkzeuge lassen sich überhaupt nicht in Schubladen untersie wurden daher bisher häufig außen an den Werkzeugwagen angehängt, wo sie vor dem Zugriff unbefugter Personen nicht geschützt waren.

Aufgabe der vorliegenden Erfindung ist es, einen Werkzeugwagen der eingangs genannten Art so auszugestalten, daß die Zugänglichkeit und die Übersichtlichkeit bestimmter aufzubewahrender Werkzeuge oder sonstiger Gegenstände verbessert ist.

Diese Aufgabe wird erfindungsgemäß dadurch gelöst, daß die Aufbewahrungsmittel mindestens einen ausziehbaren vertikalen Wandauszug umfassen, welcher eine vertikale Platte mit einer Vielzahl von Befestigungselementen aufweist.

Bei der erfindungsgemäßen Ausgestaltung des Werkzeugwagens werden also die besonders übersichtlich anzuordnenden und leicht zu erreichenden Gegenstände, insbesondere Werkzeuge, nicht auf dem Boden einer Schublade untergebracht sondern an einer Seitenfläche einer vertikalen, verschiebbaren Platte angeordnet. Ist der Wandauszug aus dem Innenraum des schrankartigen Aufbaues des Werkzeugwagens herausgefahren, lassen sich alle an der vertikalen Platte angeordneten Gegenstände auf einen Blick erfassen. Auf jeden dieser Gegenstände ist der direkte Zugriff möglich.

Bei den Befestigungselementen kann es sich insbesondere um Befestigungslöcher handeln.

Die vertikale Platte kann von einer Seite her bestückbar sein. Dann kann die vertikale Platte in unmittelbarer Nähe einer seitlichen Wange des schrankartigen Aufbaues angebracht werden; auf der bestückbaren Seite steht in diesem Falle verhältnismäßig viel Platz zur Verfügung.

Alternativ ist es auch möglich, die vertikale Platte von beiden Seiten her bestückbar zu machen; in diesem Falle muß auf beiden Seiten der vertikalen Platte für ausreichend Raum gesorgt werden. Sie kann dann nicht in unmittelbarer Nachbarschaft zur seitlichen Wange vorgesehen werden.

Zweckmäßigerweise ist die vertikale Platte über Teleskopschienen an Traversen befestigt, die ihrerseits an der Bodenplatte bzw. der Oberplatte des schrankartigen Aufbaues angeordnet sind. Hierfür lassen sich herkömmliche Teleskopschienen, wie sie auch für Schubladen verwendet werden, einsetzen.

Besonders vielfältig nutzbar ist diejenige Ausgestaltung des erfindungsgemäßen Werkzeugwagens, bei welcher der Innenraum des schrankartigen Aufbaues durch mindestens eine Trennwand in mindestens zwei Abteile unterteilt ist, von denen mindestens eines mit konventionellen Schubladen und mindestens eines mit einem vertikalen Wandauszug bestückt ist. Größere oder sperrige Gegenstände oder solche, die sich ausschließlich auf einer horizontalen Unterlage unterbringen lassen, werden dann in die konventionellen Schubladen eingelegt. Diejenigen Gegenstände und Werkzeuge dagegen, die in der oben beschriebenen Weise besonders leicht übersehbar und zugänglich sein sollen, finden an dem vertikalen Wandauszug ihren Platz.

Ein Ausführungsbeispiel der Erfindung wird nachfolgend anhand der Zeichnung näher erläutert; es zeigen
- Figur 1: perspektivisch einen Werkzeugwagen mit vollständig eingefahrenen Einteilungsmitteln;
- Figur 2: den Werkzeugwagen von Figur 1 mit teilweise ausgefahrenem vertikalem Lochwandauszug.

Der in der Zeichnung dargestellte Werkzeugwagen umfaßt einen schrankartigen Aufbau 1, der von Rädern 2 getragen wird. Der Korpus des schrankartigen Aufbaues 1 wird von zwei seitlichen Wangen 3, einer Bodenplatte 4 und einer Oberplatte 5 gebildet. Die beiden Wangen 3, die Bodenplatte 4 und die Oberplatte 5 bilden auf gegenüberliegenden Seiten Zugangsöffnungen 6, über welche der Innenraum des schrankartigen Aufbaues 1 erreicht werden kann. Jede Zugangsöffnung 6 ist durch einen Rolladen 8 verschließbar.

Eine Trennwand 9 erstreckt sich vertikal zwischen Bodenplatte 4 und Oberplatte 5 parallel zu den Wangen 3 und unterteilt den Innenraum des schrankartigen Aufbaues 1 in zwei Abteile 10 und 11.

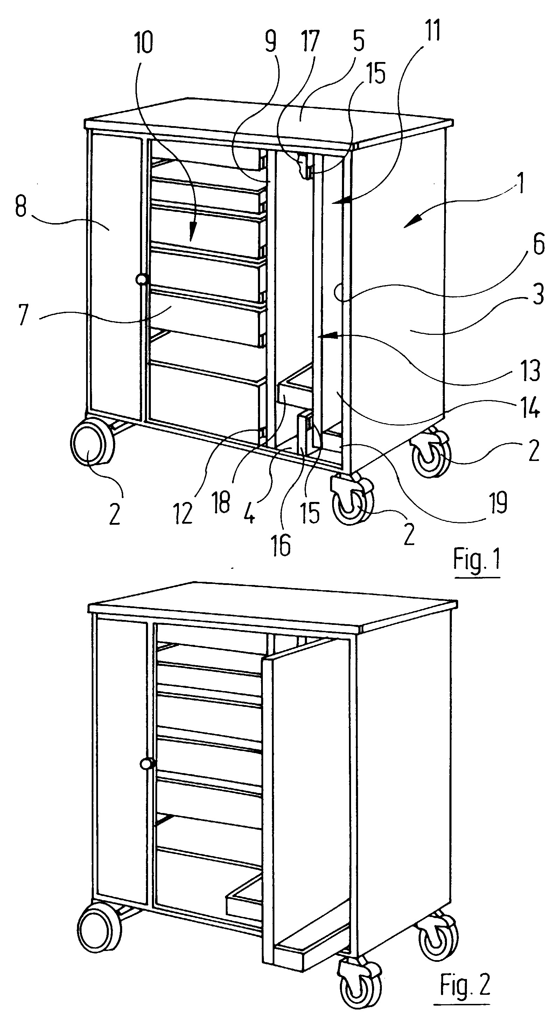

Im in der Zeichnung linken Abteil 10 sind in in bekannter Weise mehrere übereinanderliegende Schubladen 7 untergebracht, die jeweils über Teleskopschienen 12 in bekannter Weise einerseits an der in Figur 1 linken Wange 3 und andererseits an der Trennwand 9 verschiebbar befestigt sind. Der genaue Aufbau der Aufbewahrungsmittel, welche in dem Abteil 10 des schrankartigen Aufbaues 1 untergebracht sind, ist im vorliegenden Zusammenhang ohne Interesse.

Im in der Zeichnung rechten Abteil 11 des schrankartigen Aufbaues 1 ist ein vertikaler Lochwandauszug 13 untergebracht. Dieser umfaßt im dargestellten Ausführungsbeispiel eine vertikal stehende Platte 14, die sich parallel zu den Wangen 3 und damit auch zur Trennwand 9 erstreckt, und die mit einer Vielzahl von in der Zeichnung nicht dargestellten Durchgangslöchern versehen ist, an denen Befestigungsmittel für Werkzeug eingesetzt werden können. Die vertikale Platte 14 des Lochwandauszuges 13 ist über Teleskopschienen 15 an Traversen 16, 17 verschiebbar gelagert, die ihrerseits an der Bodenplatte 4 bzw. der Oberplatte 5 festgelegt sind.

Im unteren Bereich sind an die vertikale Platte 14 des Lochwandauszugs 13, sich nach entgegengesetzten Richtungen erstreckend, zwei im Querschnitt rechteckige Behälter 18, 19 angefügt, in welche Gegenstände wie z. B. Flaschen oder dergleichen eingestellt werden können.

Die vertikale Platte 14 des Lochwandauszugs 13 läßt sich vollständig aus dem Innenraum des schrankartigen Aufbaues 1 herausziehen; in Figur 2 der Zeichnung ist also nur eine Zwischenposition dargestellt, in welcher der Lochwandauszug 13 nur teilweise ausgefahren ist.

In der ausgefahrenen Position des Lochwandauszuges 13 lassen sich alle an der vertikalen Platte 14 eingehängten Werkzeuge problemlos erreichen; auch die Behälter 18 und 19 lassen sich über ihre gesamte Längserstreckung hinweg bedienen. Ist der Lochwandauszug 13, wie in Figur 1 dargestellt, in den schrankartigen Aufbau 1 eingeschoben, können die Rolläden 8 geschlossen werden, so daß alle Gegenstände innerhalb des schrankartigen Aufbaues 1, mögen diese sich nun in den Schubladen 7 oder an dem Lochwandauszug 13 befinden, für Unbefugte unzugänglich sind.

## Patentansprüche

1. Werkzeugwagen mit einem von Rädern getragenen schrankartigen Aufbau, in dessen von mindestens zwei seitlichen Wangen, einer Bodenplatte und einer Oberplatte begrenztem Innenraum ausziehbare Mittel zur Aufbewahrung von Gegenständen, insbesondere von Werkzeugen, angeordnet sind,
dadurch gekennzeichnet, daß
die Aufbewahrungsmittel mindestens einen ausziehbaren Wandauszug (13) umfassen, welcher eine vertikale Platte (14) mit einer Vielzahl von Befestigungselementen aufweist.

2. Werkzeugwagen nach Anspruch 1, dadurch gekennzeichnet, die Befestigungselemente an der vertikalen Platte (14) Befestigungslöcher sind.

3. Werkzeugwagen nach Anspruch 1 oder 2, dadurch gekennzeichnet, daß die vertikale Platte (14) von einer Seite her bestückbar ist.

4. Werkzeugwagen nach Anspruch 1 oder 2, dadurch gekennzeichnet, daß die vertikale Platte (14) von beiden Seiten her bestückbar ist.

5. Werkzeugwagen nach einem der vorhergehenden Ansprüche, dadurch gekennzeichnet, daß die vertikale Platte (14) über Teleskopschienen (15) an Traversen (16, 17) befestigt ist, die ihrerseits an der Bodenplatte (4) bzw. der Oberplatte (5) des schrankartigen Aufbaues (1) angeordnet sind.

6. Werkzeugwagen nach einem der vorhergehenden Ansprüche, dadurch gekennzeichnet, daß der Innenraum des schrankartigen Aufbaues (1) durch mindestens eine Trennwand (9) in mindestens zwei Abteile (10, 11) unterteilt ist, von denen mindestens eines (10) mit konventionellen Schubladen (7) und mindestens eines (11) mit einem vertikalen Wandauszug (13) bestückt ist.
